# EUROPEAN PATENT SPECIFICATION

(11) **EP 3 351 860 B1**
(45) Date of publication and mention of the grant of the patent: **07.08.2019**
(21) Application number: 18150270.9
(22) Date of filing: 04.01.2018
(51) Int. Cl.: F24D 3/10, F16J 3/02, F16L 55/053

(54) **EXPANSION VESSEL WITH DIAPHRAGM**
AUSDEHNUNGSGEFÄSS MIT MEMBRAN
RÉCIPIENT D'EXPANSION AVEC DIAPHRAGME

(30) Priority: 18.01.2017 IT 201700004788
(43) Date of publication of application: 25.07.2018
(73) Proprietor: Varem S.p.A., 35024 Bovolenta (PD) (IT)
(72) Inventor: MAZZUCATO, Filippo, 35041 BATTAGLIA TERME PD (IT)
(74) Representative: Modiano, Micaela Nadia

(56) References cited:
- US-A- 5 386 925
- US-A- 5 551 590
- US-A1- 2003 155 386

## Description

The present invention relates to an expansion vessel with diaphragm.

The expansion vessel in question is applied in particular in domestic sanitary plumbing systems, in irrigation systems and in water distribution systems (for potable and other water), for pumping and raising water and in heating systems (domestic and civil).

As is known, expansion vessels are designed to absorb the variation in volume of liquid in the system, thus assisting its correct operation in all its operational steps, thus preventing sudden changes in pressure and hazardous water hammers in the circuit, which otherwise would have to be absorbed by the piping and by the rest of the system, with high risk of damage.

The expansion vessels known today are mainly constituted by a hollow body, which is defined by two half-shells closed hermetically onto each other, and by a membrane, elastically deformable and typically made of synthetic rubber, which is located inside the hollow body and is adapted to define two variable-volume chambers that are hermetically separated inside this hollow body, of which a first chamber is for a liquid and a second chamber is for a gas.

In the particular case of expansion vessels with diaphragm, the membrane is coupled perimetrically to the inner wall of the hollow body, to define the two variable-volume chambers.

Furthermore, in expansion vessels for potable water systems, the half-shell designed to contain the water is typically lined internally with a lining made of plastic material that can withstand a maximum temperature of approximately 70°C, which therefore limits the operating temperature (especially in sanitary use).

The exterior of the expansion vessel is liquid-painted and, since this is not very scratch-resistant, special packaging is necessary for storage and for shipping.

In order to couple the membrane to the inner wall of the hollow body, its edge is typically folded and retained between the wall of the half-shell and an inner ring. Alternatively, after inserting the membrane and the ring, the half-shell is deformed to make a groove on the outer circumference and a corresponding inner rib which, by reducing the cross-section of the hollow body, presses the edge of the membrane onto the ring, thus preventing its extraction. These solutions subject the material of the membrane to mechanical stress.

As the internal pressure in the vessel rises, a permanent deformation of the membrane is generated by widening, which leads it to obstruct the hole for filling and emptying the vessel.

This situation leads to a series of drawbacks that are not negligible and which are described below.

In the volume comprised between the membrane and the inner wall of the half-shell with the hole for filling and emptying, water stagnates (with dead volume that can reach 20%), which can favor the formation of bacteria (for example legionella) and, in expansion vessels for potable water systems, can compromise the quality of the water in circulation.

Another drawback is incomplete emptying, which penalizes use of the vessel since the useful volume of water that can be contained is appreciably reduced (up to 20% of the useful working volume is represented by this dead volume).

A further drawback is due to the fact that obstructing the hole for filling and emptying does not ensure a good internal circulation of the flow of water in sanitary use.

Even when inactive, the membrane can touch the perimeter of the hole for filling and emptying, adhering to it and sometimes causing cuts. The adhesion generates problems in starting the system, which on first filling requires a high system pressure.

Another drawback arises at the hole for filling/emptying, where a connector is welded for connection to a hydraulic circuit: leaks of liquid can occur at the weld.

US 2003/0155386 discloses a known expansion vessel comprising a hollow body, formed by a first half-shell and by a second half-shell, which are closed hermetically onto each other, and provided with a connector for connection to a hydraulic circuit, and an elastically deformable membrane which is installed inside said hollow body and is coupled perimetrically to the internal wall of said hollow body, forming two chambers with a variable volume which are hermetically separated, of which a first chamber for a liquid and a second chamber for a gas, wherein said membrane is bell-shaped, and there being means for preventing the egress of said membrane from said connector.

The aim of the present invention is to provide an expansion vessel which is capable of improving the known art in one or more of the above mentioned aspects.

Within this aim, an object of the invention is to provide an expansion vessel that is capable of overcoming the drawback of permanent deformation of the membrane, therefore increasing the number of operating cycles for which the expansion vessel is capable of operating optimally.

Another object of the invention is to raise the limit of the operating temperature.

Furthermore, another object of the present invention is to overcome the drawbacks of the known art in a different manner to any existing solutions.

A still further object of the invention is to provide an expansion vessel that is highly reliable, easy to implement and low cost.

This aim and these and other objects which will become better apparent hereinafter are achieved by an expansion vessel with diaphragm according to claim 1, optionally provided with one or more of the characteristics of the dependent claims.

Further characteristics and advantages of the invention will become better apparent from the description of two preferred, but not exclusive, embodiments of the expansion vessel with diaphragm according to the invention, which are illustrated for the purposes of non-limiting example in the accompanying drawings wherein:
- Figure 1 is a cross-sectional front elevation view of a first embodiment of the expansion vessel according to the invention;
- Figure 2 is an exploded perspective view of the expansion vessel according to the invention, again in its first embodiment;
- Figure 3 shows an enlarged detail of Figure 1;
- Figure 4 shows another enlarged detail of Figure 1;
- Figure 5 is a perspective view of an element of the expansion vessel, in the first embodiment;
- Figure 6 is a cross-sectional view of the same element shown in Figure 5;
- Figure 7 is a cross-sectional front elevation view of a second embodiment of the expansion vessel according to the invention;
- Figure 8 is a plan view of the expansion vessel according to the invention, again in its second embodiment;
- Figure 9 shows an enlarged detail of Figure 7.

With reference to Figures from 1 to 6, the expansion vessel with diaphragm according to the invention, generally designated by the reference numeral 10 in its first embodiment, comprises a hollow body 11, which is defined by a first half-shell 12a and by a second half-shell 12b, which are closed hermetically onto each other, and which is provided with a connector 13 for connection to a hydraulic circuit (at a hole for filling and emptying), and an elastically deformable membrane 14 which is installed inside the hollow body 11 and is coupled perimetrically to the inner wall of the hollow body 11, defining two variable-volume chambers which are hermetically separated, of which a first chamber 15a for a liquid and a second chamber 15b for a gas.

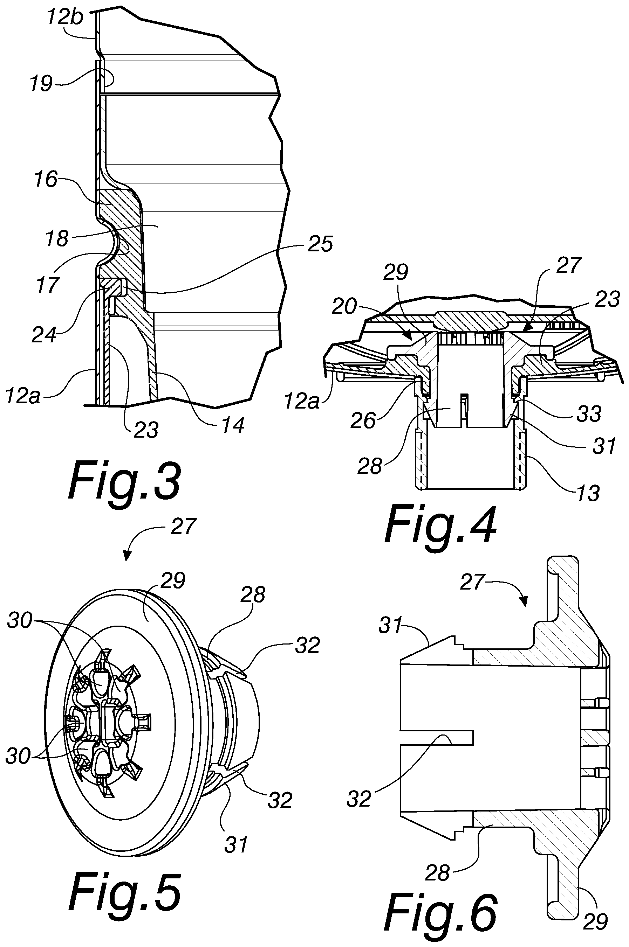

The membrane 14 is bell-shaped and as can be clearly seen, in particular in the enlargement in Figure 3, it has an edge 16 shaped complementarily on one of its sides with respect to a circular preformed protrusion 17 which extends on the inner wall of the half-shell 12a and is retained so as to adhere to the protrusion 17 by a ring 18 which in turn is shaped complementarily with respect to the other side of the edge 16 and is adapted to receive, in abutment against its perimeter, an edge 19 of the second half-shell 12b which overlaps the edge of the first half-shell 12a.

Substantially the edge 16 of the membrane acts as an instrument for connection with the hollow body 11, and the ring 18 keeps it in the installation position since it in turn is locked axially in place (taking the axis of symmetry of the expansion vessel 10 as a reference) by way of resting, in abutment, the edge 19 of the second half-shell 12b which overlaps the edge of the first half-shell 12a, at which it is welded.

The expansion vessel 10 comprises means 20 of preventing the egress of the membrane 14 from the connector 13 to the hydraulic circuit and is conveniently provided, in a known manner, with a valve 21, at the second chamber 15b, and with a valve cap 22.

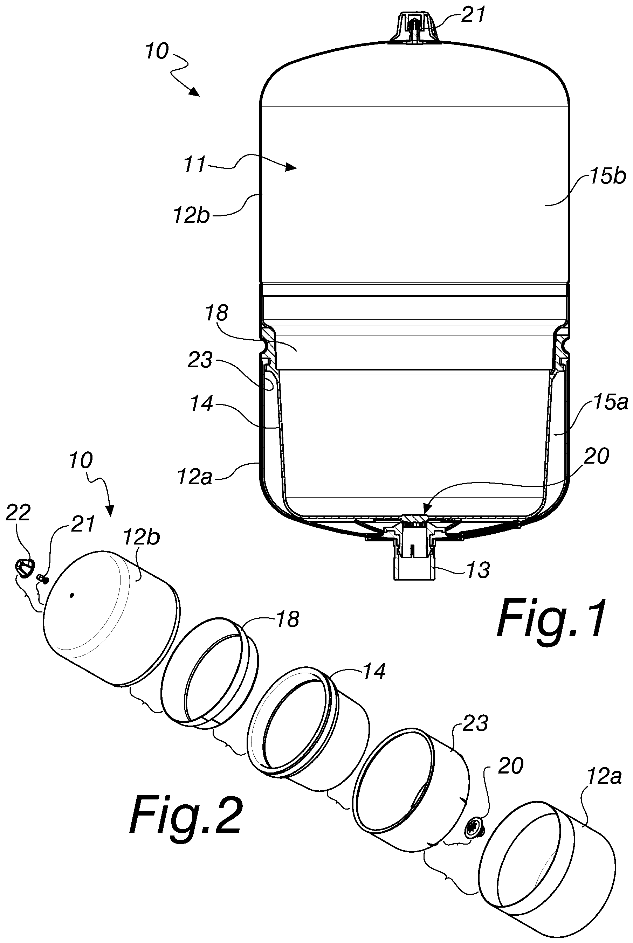

This embodiment of the vessel is particularly advantageous for use in potable water circuits. To this end, the expansion vessel 10 conveniently also comprises an inner lining 23 for the first half-shell 12a, clearly visible in the exploded view in Figure 2, which prevents the water from coming into contact with the metal surface of the half-shell.

The inner lining 23 is made of elastically deformable plastic material, such as rubber, adapted to withstand temperatures of the liquid higher than 99°C, and is shaped complementarily to the edge 16 of the membrane 14.

Preferably, the inner lining 23 is constituted by silicone.

In particular it should be noted, from observing the enlargement in Figure 3, that it is provided with a step-like protrusion 24 which extends in a circular arrangement along its edge and is adapted to enter a complementarily-shaped groove 25 on the edge 16 of the membrane 14.

This particular contrivance makes it possible to keep the inner lining 23 in place in the vessel structure as well. It is in fact held in place by the coupling to the membrane 14, which in turn is kept in position by virtue of the ring 18.

The inner lining 23 has an opening from which extends an annular portion 26, shown in Figure 4, which is adapted to be inserted into the connector 13, thus ensuring the watertight seal between the connector and the protection and therefore preventing the water from coming into contact with the half-shell 12a and protecting the weld area of the connector from any leaks.

The means 20 of preventing the egress of the membrane 14 are constituted, in this first embodiment, by a mushroom-shaped element 27 made of plastic material, which is internally hollow and is to be accommodated inside the hollow body 11 by inserting a shank 28 thereof into the connector 13 and with a head portion 29 thereof, which is provided with holes 30, at the connector 13.

The mushroom-shaped element 27 is shown alone in Figure 5 and in Figure 6.

The shank 28 is conveniently provided with a flared end portion 31 and longitudinal slits 32 in order to facilitate the snap-insertion into the connector 13, during which it is capable of reducing its cross-section by deforming itself elastically by virtue of the slits 32. The connector 13 in turn is conveniently provided with a region for guiding insertion, which is flared like the end portion 31, in order to facilitate its passage and get past the adapted locking step 33 (shown in Figure 4).

Substantially, at the connector 13, the inner lining 23 is closed in a sandwich-like fashion between the mushroom-shaped element 27 and the first half-shell 12a. In particular this situation arises at a part of the shank 28, where the annular portion 26 of the inner lining 23 is also present, and at an annulus of the head portion 29, about the shank 28.

In this region the mushroom-shaped element 27 and the inner lining 23 are conveniently shaped complementarily.

With reference to Figures from 7 to 9, the expansion vessel with diaphragm according to the invention is generally designated by the reference numeral 110 in the second embodiment.

This embodiment is preferable for expansion vessels intended to be installed in plumbing circuits for non-potable water.

The expansion vessel 110 differs from the vessel in the previous embodiment in the prevention means 120, which are different from the ones described previously, and in the absence of the inner lining 23. Since it is not intended for use with potable water systems, it is in fact not necessary to line the metallic surface of the half-shell that comes into contact with the liquid.

It therefore comprises, as described above for the previous embodiment, a hollow body 111 which is defined by a first half-shell 112a and by a second half-shell 112b, which are closed hermetically onto each other, and which is provided with a connector 113 for connection to a hydraulic circuit, and an elastically deformable membrane 114 which is installed inside the hollow body 111 and is coupled perimetrically to the inner wall of the hollow body 111, defining two variable-volume chambers which are hermetically separated, of which a first chamber 115a for a liquid and a second chamber 115b for a gas.

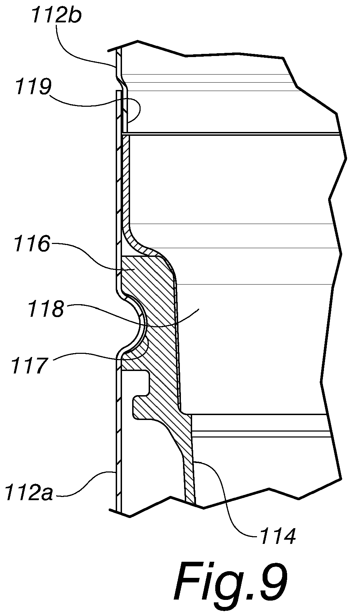

The membrane 114 is bell-shaped and, as can be seen in the enlargement in Figure 9, it has an edge 116 shaped complementarily on one of its sides with respect to a circular preformed protrusion 117 which extends on the inner wall of the half-shell 112a and is retained so as to adhere to the protrusion 117 by a ring 118 which in turn is shaped complementarily with respect to the other side of the edge 116 and is adapted to receive, in abutment against its perimeter, an edge 119 of the second half-shell 112b which overlaps the edge of the first half-shell 112a.

Substantially the edge 116 of the membrane acts as an instrument for connection with the hollow body 111, and the ring 118 keeps it in the installation position since it in turn is locked axially in place (taking the axis of symmetry of the expansion vessel 110 as a reference) by way of resting, in abutment, edge 119 of the second half-shell 112b which overlaps the edge of the first half-shell 112a at which it is welded.

The expansion vessel 110 comprises means 120 of preventing the egress of the membrane 114 from the connector 113 to the hydraulic circuit and is conveniently provided, in a known manner, with a valve 121, at the second chamber 115b, and with a valve cap 122.

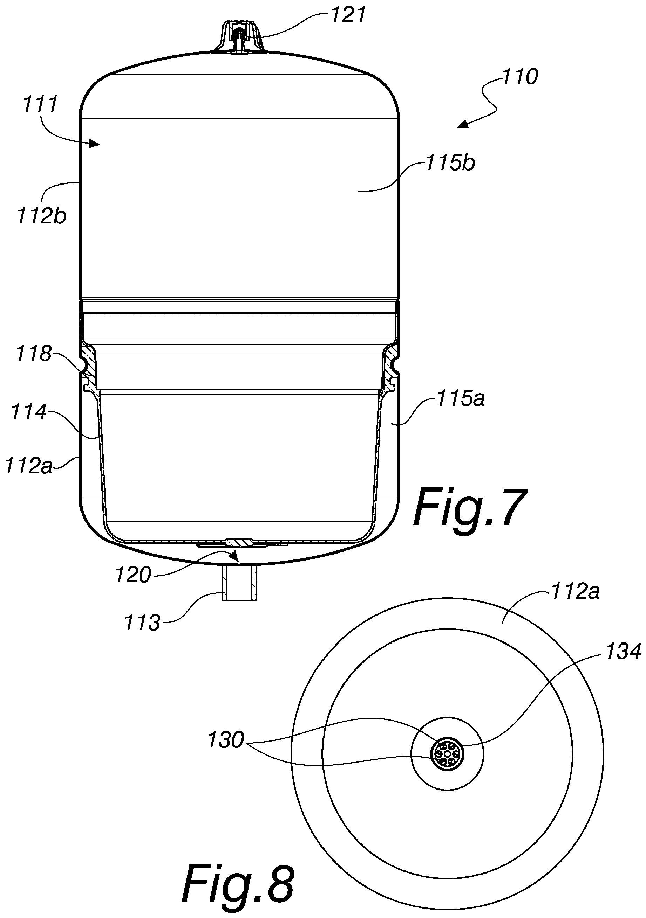

The prevention means 120 are constituted, in this embodiment, by a grille 134 with holes 130, at the connector 113. The grille is visible in plan view in Figure 8.

It can be advantageously obtained by cutting the first half-shell 112a, in the region where the connector 113 is coupled, typically by welding.

The expansion vessel 110 is made of materials that are designed for high temperatures of use and therefore compatible for applications in solar energy thermal systems (with temperature peaks of up to 130°C), with compatibility with water-glycol mixtures (and optionally with up to 100% glycol).

In both embodiments, the outside of the two half-shells, 12a, 12b and 112a and 112b, is preferably powder-painted.

Use of the expansion vessel, according to the invention, is as follows.

In its first embodiment, assembly of the expansion vessel 10 occurs first of all by inserting the inner lining 23 into the first half-shell 12a, positioning the annular portion 26 at the connector 13. Subsequently the snap-acting mushroom-shaped element 27 is inserted, with the shank 28 in the connector 13, and then the membrane 14 is mounted, with the edge 16 at the protrusion 17. Then the ring 18 is inserted and this is locked in place by the edge 19 of the second half-shell 12b which overlaps the edge of the first half-shell 12a, when the hollow body 11 is closed.

In the second embodiment, the expansion vessel 110 is assembled by mounting the membrane 114 and subsequently the ring 118, which is then locked in place with the overlapping edge 119.

In both embodiments, the circular protrusion 17, 117 is provided before assembly. This makes it possible to hold the membrane 14, 114 to the inner wall of the hollow body 11, 111, thus limiting the mechanical stress to which it is subjected. This contrivance also makes it possible to use half-shells that are preformed before assembly, thus avoiding subsequent machining operations.

In the first embodiment, the combination of the membrane 14, the ring 18 and the inner lining 23, in the shape structures described, makes it possible to provide a system with a triple seal, separating the air-side and water-side seals and protecting the product from any leaks between the two chambers.

The mushroom-shaped element 27 and the grille 134 prevent the membrane 14, 114, when inactive, from obstructing the hole at the connector; in this manner there are no adhesions of the membrane to the perimeter of the hole for filling and emptying, and the liquid is free to exit from the vessel through the holes 30 and 130 and return to the hydraulic circuit.

This prevents water stagnation, adhesion of the membrane to the perimeter of the hole for filling and emptying, and therefore also high system pressures on first filling, and optimizes the internal circulation of the flow of water in sanitary use.

Furthermore, the mushroom-shaped element 27 described in the first embodiment protects the weld of the connector thus preventing any leaks, and therefore makes it possible to use O-ring gaskets. In addition it prevents infiltrations of water between the inner lining 23 and the first half-shell 12a.

It should also be noted that the inner lining 23 made of silicone and the mushroom-shaped element 27 made of plastic material withstand the temperature of 99°C and make it possible therefore to use the expansion vessel in systems for potable water and for domestic hot water.

The powder-painting of the outside of the vessel improves its scratch- and abrasion-resistance.

In practice it has been found that the invention fully achieves the intended aim and objects, by providing an expansion vessel that is capable of overcoming the above mentioned drawbacks for the known art, in particular in the capacity to improve the mounting of the membrane and in the capacity to prevent the obstruction of the hole for filling and emptying.

The invention, thus conceived, is susceptible of numerous modifications and variations, all of which are within the scope of the appended claims. Moreover, all the details may be substituted by other, technically equivalent elements.

In practice the materials employed, provided they are compatible with the specific use, and the contingent dimensions and shapes, may be any according to requirements and to the state of the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An expansion vessel (10, 110) with diaphragm, which comprises a hollow body (11, 111) which is defined by a first half-shell (12a, 112a) and by a second half-shell (12b, 112b), which are closed hermetically onto each other, and which is provided with a connector (13, 113) for connection to a hydraulic circuit, and an elastically deformable membrane (14, 114) which is installed inside said hollow body (11, 111) and is coupled perimetrically to the inner wall of said hollow body (11, 111), defining two variable-volume chambers which are hermetically separated, of which a first chamber (15a, 115a) for a liquid and a second chamber (15b, 115b) for a gas, the first half-shell (12a, 112a) comprising a circular preformed protrusion (17, 117) provided before assembly of the expansion vessel extending on the inner wall of said first half-shell (12a, 112a), and said membrane (14, 114) is bell-shaped, with an edge (16, 116) shaped complementarily on one of its sides with respect to said circular preformed protrusion (17, 117) such that mechanical stress on the membrane is limited, wherein said edge (16, 116) of the membrane is retained so as to adhere to said protrusion (17, 117) by a ring (18, 118) which in turn is shaped complementarily with respect to the other side of said edge (16, 116) and is adapted to receive, in abutment against its perimeter, an edge (19, 119) of said second half-shell (12b, 112b) which overlaps the edge of said first half-shell (12a, 112a),
there also being means (20, 120) of preventing the egress of said membrane (14, 114) from said connector (13, 113).

2. The expansion vessel according to claim 1, **characterized in that** it comprises an inner lining (23) for said first half-shell (12a), which is made of elastically deformable plastic material and is shaped complementarily to said edge (16) of said membrane (14).

3. The expansion vessel according to claim 2, **characterized in that** said inner lining (23) is constituted by silicone.

4. The expansion vessel according to claim 2 or 3, **characterized in that** said inner lining (23) is provided with a step-like protrusion (24) which extends in a circular arrangement along its edge and is adapted to enter a complementarily-shaped groove (25) on said edge (16) of said membrane (14).

5. The expansion vessel according to one or more of the claims 2 to 4, **characterized in that** said inner lining (23) has an opening from which an annular portion (26) extends which is adapted to enter said connector (13).

6. The expansion vessel according to one or more of the preceding claims, **characterized in that** said means (20) of preventing the egress of said membrane (14) are constituted by a mushroom-shaped element (27), which is internally hollow and is to be accommodated inside said hollow body (11) by inserting a shank (28) thereof into said connector (13) and with a head portion thereof (29), which is provided with holes (30), at said connector (13).

7. The expansion vessel according to claim 6, **characterized in that** said inner lining (23) is closed in a sandwich-like fashion between said mushroom-shaped element (27) and said first half-shell (12a) at said connector (13).

8. The expansion vessel according to claim 1, **characterized in that** said means (120) of preventing the egress of said membrane (114) are constituted by a grille (134) with holes (130) at said connector (113).

## Patentansprüche

1. Ein Ausdehnungsgefäß (10, 110) mit Membran, das einen Hohlkörper (11, 111) umfasst, der durch eine erste Halbschale (12a, 112a) und eine zweite Halbschale (12b, 112b) bestimmt ist, welche hermetisch aufeinander geschlossen werden; und der mit einem Anschlusselement (13, 113) für den Anschluss an einen Hydraulikkreis und mit einer elastisch verformbaren Membran (14, 114) versehen ist, die in dem Hohlkörper (11, 111) installiert und im Umfangsbereich mit der Innenwand des Hohlkörpers (11, 111) gekoppelt ist, wodurch zwei Kammern mit veränderlichem Volumen bestimmt werden, die hermetisch getrennt sind und von denen eine erste Kammer (15a, 115a) für eine Flüssigkeit und eine zweite Kammer (15b, 115b) für ein Gas bestimmt ist;
wobei die erste Halbschale (12a, 112a) einen kreisförmigen vorgeformten Vorsprung (17, 117) umfasst, bereitgestellt vor der Montage des Ausdehnungsgefäßes, sich an der Innenwand der ersten Halbschale (12a, 112a) erstreckend, und die Membran (14, 114) glockenförmig ist, mit einem Rand (16, 116), der an einer seiner Seiten komplementär zu dem kreisförmigen vorgeformten Vorsprung (17, 117) geformt ist, so dass die mechanische Belastung der Membran begrenzt ist;
wobei der Rand (16, 116) der Membran von einem Ring (18, 118) haftend an dem Vorsprung (17, 117) gehalten wird, wobei der Ring wiederum komplementär zur anderen Seite des Randes (16, 116) geformt und ausgebildet ist, um, anstoßend an seinen Umfang, eine Kante (19, 119) der zweiten Halbschale (12b, 112b) aufzunehmen, die sich mit der Kante der ersten Halbschale (12a, 112a) überlagert;
wobei auch Mittel (20, 120) vorhanden sind, um den Austritt der Membran (14, 114) aus dem Anschlusselement (13, 113) zu verhindern.

2. Das Ausdehnungsgefäß gemäß Anspruch 1, **dadurch gekennzeichnet, dass** es eine innere Auskleidung (23) für die erste Halbschale (12a) umfasst, die aus elastisch verformbarem Kunststoffmaterial besteht und komplementär zu dem Rand (16) der Membran (14) geformt ist.

3. Das Ausdehnungsgefäß gemäß Anspruch 2, **dadurch gekennzeichnet, dass** die innere Auskleidung (23) aus Silikon besteht.

4. Das Ausdehnungsgefäß gemäß Anspruch 2 oder 3, **dadurch gekennzeichnet, dass** die innere Auskleidung (23) mit einem stufenartigen Vorsprung (24) versehen ist, der sich in einer kreisförmigen Anordnung entlang ihrem Rand erstreckt und ausgebildet ist, um in eine komplementär geformte Nut (25) in dem Rand (16) der Membran (14) einzudringen.

5. Das Ausdehnungsgefäß gemäß einem oder mehreren der Ansprüche 2 bis 4, **dadurch gekennzeichnet, dass** die innere Auskleidung (23) eine Öffnung hat, von der sich ein ringförmiger Abschnitt (26) erstreckt, welcher ausgebildet ist, um in das Anschlusselement (13) einzudringen.

6. Das Ausdehnungsgefäß gemäß einem oder mehreren der obigen Ansprüche, **dadurch gekennzeichnet, dass** die Mittel (20) zum Verhindern des Austritts der Membran (14) aus einem pilzförmigen Element (27) bestehen, das innen hohl ist und in dem Hohlkörper (11) aufgenommen werden soll durch Einführen eines Schafts (28) desselben in das Anschlussstück (13) und mit einem Kopfabschnitt (29) desselben, der mit Löchern (30) versehen ist, an dem Anschlusselement (13).

7. Das Ausdehnungsgefäß gemäß Anspruch 6, **dadurch gekennzeichnet, dass** die innere Auskleidung (23) sandwichartig zwischen dem pilzförmigen Element (27) und der ersten Halbschale (12a) an dem Anschlusselement (13) geschlossen ist.

8. Das Ausdehnungsgefäß gemäß Anspruch 1, **dadurch gekennzeichnet, dass** die Mittel (120) zum Verhindern des Austritts der Membran (114) aus einem Gitter (134) mit Löchern (130) an dem Anschlusselement (113) bestehen.

## Revendications

1. Récipient d'expansion (10, 110) avec diaphragme, qui comporte un corps creux (11, 111) qui est défini par une première demi-coque (12a, 112a) et par une seconde demi-coque (12b, 112b), qui sont fermées hermétiquement l'une sur l'autre, et qui est pourvu d'un raccord (13, 113) pour un raccordement à un circuit hydraulique, et une membrane élastiquement déformable (14, 114) qui est installée à l'intérieur dudit corps creux (11, 111) et est couplée de manière périmétrique à la paroi intérieure dudit corps creux (11, 111), en définissant deux chambres à volume variable qui sont hermétiquement séparées, dont une première chambre (15a, 115a) est destinée à un liquide et une seconde chambre (15b, 115b) à un gaz,
la première demi-coque (12a, 112a) comportant une saillie préformée circulaire (17, 117) fournie avant l'assemblage du récipient d'expansion s'étendant sur la paroi intérieure de ladite première demi-coque (12a, 112a), et ladite membrane (14, 114) est en forme de cloche, avec un bord (16, 116) formé de manière complémentaire sur l'un de ses côtés par rapport à ladite saillie préformée circulaire (17, 117) de telle sorte qu'une contrainte mécanique sur la membrane est limitée,
dans lequel ledit bord (16, 116) de la membrane est maintenu de manière à adhérer à ladite saillie (17, 117) par une bague (18, 118) qui est à son tour formée de manière complémentaire par rapport à l'autre côté dudit bord (16, 116) et est adaptée pour recevoir, en butée contre son périmètre, un bord (19, 119) de ladite seconde demi-coque (12b, 112b) qui chevauche le bord de ladite première demi-coque (12a, 112a),
des moyens (20, 120) pour empêcher la sortie de ladite membrane (14, 114) dudit raccord (13, 113) y étant également prévus.

2. Récipient d'expansion selon la revendication 1, caractérisé ce qu'il comporte un garnissage intérieur (23) pour ladite première demi-coque (12a), qui est constitué d'une matière plastique élastiquement déformable et est formé de manière complémentaire audit bord (16) de ladite membrane (14).

3. Récipient d'expansion selon la revendication 2, **caractérisé en ce que** ladite garniture intérieure (23) est constituée de silicone.

4. Récipient d'expansion selon la revendication 2 ou 3, **caractérisé en ce que** ledit garnissage intérieur (23) est pourvu d'une saillie analogue à un gradin (24) qui s'étend dans un agencement circulaire le long de son bord et est adaptée pour pénétrer dans une rainure (25) formée de manière complémentaire sur ledit bord (16) de ladite membrane (14).

5. Récipient d'expansion selon une ou plusieurs des revendications 2 à 4, **caractérisé en ce que** ledit garnissage intérieur (23) a une ouverture à partir de laquelle s'étend une partie annulaire (26) qui est adaptée pour pénétrer dans ledit raccord (13).

6. Récipient d'expansion selon une ou plusieurs des revendications précédentes, **caractérisé en ce que** lesdits moyens (20) pour empêcher la sortie de ladite membrane (14) sont constitués d'un élément en forme de champignon (27), qui est intérieurement creux et doit être reçu à l'intérieur dudit corps creux (11) en insérant une queue (28) de celui-ci dans ledit raccord (13) et avec une partie de tête (29) de celui-ci, qui est pourvue de trous (30), au niveau dudit raccord (13).

7. Récipient d'expansion selon la revendication 6, **caractérisé en ce que** ledit garnissage intérieur (23) est fermé en sandwich entre ledit élément en forme de champignon (27) et ladite première demi-coque (12a) au niveau dudit raccord (13).

8. Récipient d'expansion selon la revendication 1, **caractérisé en ce que** lesdits moyens (120) pour empêcher la sortie de ladite membrane (114) sont constitués d'une grille (134) munie de trous (130) au niveau dudit raccord (113).
